# EUROPÄISCHE PATENTSCHRIFT

(11) **EP 2 534 443 B1**
(45) Veröffentlichungstag und Bekanntmachung des Hinweises auf die Patenterteilung: **12.04.2017**
(21) Anmeldenummer: 11706781.9
(22) Anmeldetag: 14.02.2011
(51) Int. Cl.: G01C 15/00

(54) **SYSTEM ZUR BODENVERMESSUNG**
SYSTEM FOR SURVEYING A GROUND
SYSTÈME D'ARPENTAGE D'UN SOL

(30) Priorität: 20.10.2010 DE 102010042650; 12.02.2010 US 303756 P
(43) Veröffentlichungstag der Anmeldung: 19.12.2012
(73) Patentinhaber: Robert Bosch GmbH, 70442 Stuttgart (DE)
(72) Erfinder: ZIMMERMANN, Thomas, 80639 Muenchen (DE)
(86) Internationale Anmeldenummer: PCT/EP2011/052150
(87) Internationale Veröffentlichungsnummer: WO 2011/098608

(56) Entgegenhaltungen:
- EP-A1- 2 053 353
- EP-A2- 1 580 527
- WO-A2-2008/024335

## Beschreibung

### Stand der Technik

Die vorliegende Erfindung bezieht sich auf ein System zur Vermessung einer Oberfläche, insbesondere einer Bodenoberfläche, um die Neigung und/oder Unebenheiten der Oberfläche zu bestimmen.

Aus der internationalen Patentanmeldung WO 2006/088715 A1 ist eine Vorrichtung zur Überprüfung von Bodenunebenheiten bekannt, die zwei Laserebenen aussendet, welche zueinander so geneigt sind, dass sie sich in einer horizontalen Geraden auf Höhe der Unterseite des Gehäuses der Vorrichtung schneiden. Die Projektionseinrichtung ist dabei pendelnd aufgehängt. Wenn die Vorrichtung auf einer ebenen horizontalen Fläche steht, ist auf deren Oberfläche die Projektion genau dieser Schnittlinie zu sehen. Wenn die Neigung der Fläche, auf der die Vorrichtung steht, von der Horizontalen abweicht, so sind auf der Oberfläche die Projektionen der beiden Ebenen getrennt voneinander zu sehen.

Die WO 2008/024335 A2 offenbart einer sogenannten Kreuzlinienlaser, dessen Laserebenen definitionsgemäß ein kartesisches Koordinatensystem aufspannen.

Die EP 1 580 572 A2 offenbart ein Lasermesssystem, bei dem eine geneigte Laserebene mittels eines Rotationslasers um 360° durch den Raum verschwenkt werden kann. Durch Messung der der Laserebene an drei bekannten Punkten im Raum kann die Position und Orientierung, insbesondere die Neigung des Messsystems im Raum bestimmt und korrigiert werden.

Die EP 2 053 353 A1 offenbart ein System bestehend aus einem referenzlinienprojizierenden Gerät und einem kooperativen Ziel, welches in der Lage ist die eigene Höhe zum Boden zu bestimmen.

### Aufgabe der Erfindung

Der Erfindung liegt die Aufgabe zugrunde, ein System bestehend aus einer Markierungsvorrichtung und einer Detektionsvorrichtung zu entwickeln, um die Neigung oder Unebenheiten einer Oberfläche einfach quantitativ bestimmen zu können, um dadurch beispielsweise einfach ein Neigungsprofil der Oberfläche erstellen zu können.

Die Aufgabe wird durch ein System entsprechend dem unabhängigen Anspruch 1 gelöst.

### Offenbarung der Erfindung

Die Markierungsvorrichtung des erfindungsgemäßen Systems weist eine Projektionsvorrichtung auf, die eine vertikale Achse definiert. Die vertikale Achse kann dabei beispielsweise durch das Gehäuse definiert werden. Alternativ dazu kann die vertikale Achse auch durch ein im Inneren des Gehäuses aufgehängtes Pendel definiert werden. Bevorzugterweise erstreckt sich die vertikale Achse, die durch das Pendel definiert wird, entlang der Richtung der Erdbeschleunigung.

Die Projektionsvorrichtung weist weiterhin mindestens eine Lasereinrichtung auf, die eingerichtet ist, eine erste Laserebene und eine zweite Laserebene zu emittieren. Die erste und die zweite Laserebene können dabei durch jeweils einen Laserstrahl erzeugt werden, der auf eine Zylinderlinse trifft und dadurch in einer Richtung aufgeweitet wird. Die Laserebenen erstrecken sich dann fächerförmig von der Zylinderlinse weg. Die beiden Laserstrahlen, die für die Erzeugung der ersten und der zweiten Laserebene verwendet werden, können mittels eines strahlteilenden Elements (z.B. halbdurchlässiger Spiegel) aus einer gemeinsamen Laserquelle erzeugt werden. Es kann auch für jeden Laserstrahl eine eigene Laserquelle verwendet werden.

Die erste Laserebene und die zweite Laserebene sind dabei so angeordnet, dass sie sich entlang einer ersten Schnittgeraden schneiden, wobei die erste Schnittgerade senkrecht zur vertikalen Achse verläuft. Vorzugsweise verläuft die Schnittgerade auf Höhe der (beispielsweise durch drei Gehäusefüße der Projektionsvorrichtung bestimmten) Standfläche der Projektionsvorrichtung. Wenn in diesem Fall die zu vermessende Oberfläche eben und horizontal ist, treffen beide Laserebenen entlang der ersten Schnittgeraden auf der zu vermessenden Oberfläche auf, und es ist nur eine Laserlinie auf der zu vermessenden Oberfläche zu erkennen. Unebenheiten und/oder eine Neigung der zu vermessenden Oberfläche führen hingegen dazu, dass die beiden Laserebenen oberhalb bzw. unterhalb der Höhe der Schnittgeraden auf die zu vermessenden Oberfläche auftreffen, und daher zwei voneinander beabstandete Laserlinien auf der zu vermessenden Oberfläche zu erkennen sind.

Vorteilhafter Weise besitzt das Projektionselement der erfindungsgemäßen Projektionseinrichtung auch eine Verriegelungseinrichtung, um die Aufhängung der Laserquelle(n) der Projektionseinrichtung zu sperren, um diese beim Transport des Geräts zu schützen oder das Gerät auch an einer Wand betreiben zu können.

Die Projektionsvorrichtung der Markierungsvorrichtung weist ein Basiselement und ein die mindestens eine Lasereinrichtung aufweisendes Projektionselement auf, wobei das Projektionselement relativ zum Basiselement stellbar, insbesondere motorisch stellbar, ist.

Stellbar heißt in diesem Zusammenhang insbesondere rotierbar, höhenverstellbar aber auch voneinander trennbar. Eine Motorgetriebene Rotation oder auch Höhenverstellung erlaubt es in vorteilhafter Weise, den Rotationswinkel oder die Höhendifferenz automatisch zu bestimmen und ggfls. Auf einem Display der Vorrichtung oder des Systems darzustellen.

Die Markierungsvorrichtung zur Überprüfung von Oberflächenunebenheiten ist in einer vorteilhaften Ausführungsform derart ausgestaltet, dass die Projektionseinrichtung in einem ersten Gehäusemodul (Projektionselement) angeordnet ist, das mit verschiedenen zweiten Gehäusemodulen (Basiselementen) je nach Messaufgabe verbunden werden kann. Projektionselement und Basiselement sind somit von einander trennbar. Insbesondere ist das Projektionselement mit einer Mehrzahl von (verschiedenen) Basiselementen betreibbar.

In einer Variante dient das Basismodul dazu, die Vorrichtung mit einer aufgehängten, frei pendelnden Projektionseinrichtung zu betreiben. Damit kann die Neigung der Oberfläche bestimmt werden, auf die die Vorrichtung gestellt wird. Auch lassen sich Unebenheiten dieser Oberfläche erkennen.

In einer anderen Variante dient das Basismodul dazu, die Neigung der Projektionseinrichtung zu verändern. Hierzu ist die Aufhängung der Projektionseinrichtung im Gehäuse des Projektionsmoduls, die insbesondere ein kardanische Aufhängung ist gesperrt, damit eine Neigung des Bodens nicht automatisch ausgeglichen wird, bzw. damit die Vorrichtung auch um 90° gedreht an der Wand verwendet werden kann. Damit kann dann zwar nicht die Neigung einer Oberfläche bestimmt werden, dafür ist es möglich, die Neigung der Projektionseinrichtung an die Neigung der zu untersuchenden Oberfläche anzupassen und dadurch Unebenheiten dieser Oberfläche besonders gut zu erkennen.

Das Lösen der Sperre der kardanischen Aufhängung beim Aufsetzen des Projektionselementes auf ein geeignetes Basiselement kann durch mechanische Wechselwirkung von Komponenten der beiden Module erfolgen. Alternativ kann auch eine Kodierung des Basiselementes vom Projektionselement beispielsweise elektronisch erkannt werden.

Unabhängig davon aber kann die kardanische Aushängung auch automatisch gesperrt, wenn das Projektionselement nicht mit einem geeigneten Basiselement verbunden ist. Die Sperre wird beispielsweise beim Aufsetzen auf ein Basiselementes nur dann gelöst, wenn das Basiselement für die Neigungsbestimmung vorgesehen ist.

In einzelnen Ausführungsformen dieser Varianten kann das Basismodul eine Drehung des Projektionsmoduls und/oder eine Verstellung von dessen Höhe bewerkstelligen. Diese Stellung kann manuell oder auch motorisch betrieben werden.

In einer weiteren Ausführungsform der Markierungsvorrichtung weist die Projektionsvorrichtung mindestens eine weitere Lasereinrichtung auf, die eingerichtet ist, eine dritte Laserebene und eine vierte Laserebene zu emittieren, wobei die dritte Laserebene und die vierte Laserebene so angeordnet sind, dass sie sich entlang einer zweiten Schnittgeraden schneiden, wobei die zweite Schnittgerade parallel zur vertikalen Achse verläuft. Damit ist es möglich, gleichzeitig Unebenheiten eines Bodens und einer Wand zu ermitteln.

Das erfindungsgemäße System weist neben der Markierungsvorrichtung mit zumindest einer Projektionsvorrichtung auch eine Detektionsvorrichtung zur Bestimmung des Abstands der beiden Laserebenen entlang einer Messgeraden auf. Vorzugsweise ist die Detektionsvorrichtung so gestaltet, dass die Messgerade möglichst nah an der zu vermessenden Oberfläche liegt, wenn die Detektionsvorrichtung auf die zu vermessende Oberfläche gestellt wird. Bei bekanntem Winkel, den die beiden Laserebenen zueinander einschließen, kann aus dem Abstand der beiden Laserebenen entlang der Messgeraden dann der Abstand der zu vermessenden Oberfläche von der Höhe der Schnittgeraden automatisch ermittelt werden.

Durch Positionieren der Detektionsvorrichtung an mehreren Punkten auf der zu vermessenden Oberfläche lässt sich die Abweichung der zu vermessenden Oberfläche von der Höhe der Schnittgeraden an diesen Punkten ermitteln und somit einfach ein Neigungsprofil der zu vermessenden Oberfläche erstellen.

In einer bevorzugten Ausführungsform weist die Detektionsvorrichtung eine Zeilenkamera (beispielsweise eine CCD-Zeilenkamera) auf. Mit einer Zeilenkamera lassen sich die Punkte, an denen die Laserebenen auf die Zeilenkamera treffen, ermitteln und bei bekannter Auflösung der Zeilenkamera daraus der Abstand der beiden Laserebenen entlang der Messgeraden (und damit idealerweise auf Höhe der zu vermessenden Oberfläche) automatisch ermitteln.

Alternativ zur Zeilenkamera kann die Detektionsvorrichtung auch eine Vielzahl von Photodetektoren, die im Wesentlichen entlang der Messgeraden angeordnet sind, aufweisen. Aus den Detektionssignalen der Photodetektoren lässt sich ebenfalls der Abstand der beiden Laserebenen entlang der Messgeraden automatisch ermitteln.

Um die Richtung der zu bestimmenden Neigung (nach oben oder nach unten) automatisch ermitteln zu können, unterscheiden sich die beiden Laserebenen in mindestens einem detektierbaren Parameter. Beispielsweise können beide Laserebenen mit unterschiedlicher Frequenz amplitudenmoduliert werden. Dann kann die Detektionsvorrichtung aus den modulierten Detektionssignalen ermitteln, ob die Messgerade oberhalb oder unterhalb der Höhe der Schnittgeraden liegt. Die Amplitudenmodulation kann so gewählt sein, dass sie nur opto-elektronisch detektierbar ist.

Anstelle oder zusätzlich zu einer nur opto-elektronisch detektierbaren Modulation können die beiden Laserfächer sich auch in einem weiteren, visuell erkennbaren Parameter unterscheiden, beispielsweise durch unterschiedliche Wellenlängen des verwendeten Lichts oder durch unterschiedliche Blinkfrequenzen der Laserfächer. Dies erlaubt es einem Benutzer, die Richtung der Neigung schnell mit bloßem Auge zu erfassen.

In einer weiteren bevorzugten Ausführungsform weist das System weiterhin eine Vorrichtung zum Bestimmen des Abstands zwischen der Projektionsvorrichtung und der Detektionsvorrichtung auf. Die Vorrichtung zum Bestimmen des Abstands kann beispielsweise auf elektro-optischer Basis arbeiten. Dabei wird ein moduliertes Lasersignal von einer Quelle zu einem Ziel gesendet und das vom Ziel reflektierte und/oder gestreute Laserlicht wird von einem in der Nähe der Quelle angeordneten Detektor detektiert. Durch Bestimmung der Laufzeit und der Phasenlage des detektierten Signals kann dann der Abstand zwischen Quelle und Ziel ermittelt werden.

Beispielsweise kann die Projektionsvorrichtung des erfindungsgemäßen Systems eine Quelle für ein moduliertes Lasersignal, einen Detektor zur Detektion des von einem Ziel reflektierten und/oder gestreuten Laserlichts sowie eine elektronische Schaltung zur Auswertung des detektierten Signals und zur Bestimmung des Abstands zwischen Quelle und Ziel aufweisen. Bevorzugterweise sendet die Quelle das Lasersignal parallel zur und etwas (z.B. 2 cm) oberhalb der ersten Schnittebene. Die Detektionsvorrichtung des erfindungsgemäßen Systems kann dann das modulierte Lasersignal reflektieren und/oder streuen und das reflektierte und/oder gestreute Laserlicht kann vom Detektor der Projektionsvorrichtung detektiert werden. Daraus kann die elektronische Schaltung den Abstand der Projektionsvorrichtung von der Detektionsvorrichtung ermitteln.

In einer weiteren Ausführungsform weisen sowohl die Projektionsvorrichtung als auch die Detektionsvorrichtung des erfindungsgemäßen Systems eine Kommunikationseinrichtung zum Senden und Empfangen von Daten auf. Bevorzugterweise können die Projektionsvorrichtung und die Detektionsvorrichtung mittels dieser Kommunikationseinrichtungen einen Datenübertragungskanal aufbauen, über den Daten von der Projektionsvorrichtung zur Detektionsvorrichtung und/oder von der Detektionsvorrichtung zur Projektionsvorrichtung übertragen werden können.

Die zu übertragenden Daten können beispielsweise die von der Projektionsvorrichtung bzw. der Detektionsvorrichtung ermittelten Messwerte sein, also beispielsweise der Abstand zwischen Projektionsvorrichtung und Detektionsvorrichtung (von der Projektionsvorrichtung zur Detektionsvorrichtung) bzw. der Abstand der beiden Laserebenen entlang der Messgeraden (von der Detektionsvorrichtung zur Projektionsvorrichtung).

Weiterhin können es die Kommunikationseinrichtungen auch erlauben, einen Datenübertragungskanal zwischen der Projektionsvorrichtung und/oder der Detektionsvorrichtung auf der einen Seite und einer weiteren Datenempfangseinheit auf der anderen Seite aufzubauen. Dann können sowohl die Projektionsvorrichtung als auch die Detektionsvorrichtung die ermittelten Messwerte zur Datenempfangseinheit übertragen, wo sie gespeichert und/oder dargestellt werden. Die Datenempfangseinheit kann eine speziell für die Kommunikation mit der Projektionsvorrichtung und/oder der Detektionsvorrichtung entwickelte Datenempfangseinheit sein. Es können aber auch andere Vorrichtungen, die ein geeignetes Datenübertragungsprotokoll einsetzen und (beispielsweise durch entsprechende Programmierung) in der Lage sind, mit der Projektionsvorrichtung und/oder der Detektionsvorrichtung zu kommunizieren, als Datenempfangseinheit zum Einsatz kommen. Beispielsweise kann ein PDA oder ein Mobiltelefon als erfindungsgemäße Datenempfangseinheit eingesetzt werden.

In einer weiteren Ausführungsform weist das erfindungsgemäße System weiter mindestens eine Anzeigevorrichtung auf. Die Anzeigevorrichtung kann mit der Projektionsvorrichtung und/oder mit der Detektionsvorrichtung in ein gemeinsames Gehäuse eingebaut sein. Die Anzeigevorrichtung kann auch Bestandteil einer separaten Datenempfangseinheit sein. Auf der Anzeigevorrichtung können unter anderem die von der Projektionsvorrichtung und der Detektionsvorrichtung ermittelten Messwerte angezeigt werden.

In einer weiteren Ausführungsform ist die Höhe der Schnittgeraden relativ zu einem Gehäuseteil der Projektionsvorrichtung verstellbar. Hierzu kann in der Projektionsvorrichtung vorgesehen sein, die Lasereinrichtung relativ zum Gehäuse der Projektionsvorrichtung in der Höhe zu verstellen. In einer weiteren Ausführungsform kann das Gehäuse der Projektionsvorrichtung auch zweiteilig ausgebildet sein und ein Basiselement und ein Projektionselement aufweisen, wobei dann das Projektionselement, in dem die Lasereinrichtung angeordnet ist, relativ zu dem Basiselement in der Höhe verstellbar ist.

Eine Verstellbarkeit der Höhe der Schnittgeraden erlaubt es, den Startpunkt, von dem aus die Neigung der zu untersuchenden Oberfläche bestimmt werden soll, zu variieren.

In einer weiteren Ausführungsform, in der das Gehäuse der Projektionsvorrichtung zweiteilig ausgebildet ist und ein Basiselement und ein Projektionselement aufweist, ist das Projektionselement relativ zum Basiselement um eine Achse parallel zur vertikalen Achse drehbar. Das Projektionselement der Projektionsvorrichtung kann manuell drehbar sein und/oder die Projektionsvorrichtung kann einen Motor aufweisen, der das Projektionselement relativ zum Basiselement dreht.

Wenn die Projektionsvorrichtung einen Motor aufweist, um das Projektionselement relativ zum Basiselement zu drehen, können die Richtung und/oder die Geschwindigkeit der Drehung durch Bedienelemente an der Projektionsvorrichtung steuerbar sein. Alternativ und/oder zusätzlich können die Richtung und/oder die Geschwindigkeit der Drehung durch eine Fernbedienung steuerbar sein, wobei die Projektionsvorrichtung in diesem Fall eine Empfangseinheit für die Signale der Fernbedienung aufweist. Die Fernbedienung kann mit der Projektionsvorrichtung beispielsweise über Infrarotsignale oder Funk kommunizieren.

Wenn die Projektionsvorrichtung mittels einer Kommunikationseinrichtung mit einer Datenempfangseinheit kommunizieren kann, kann über diesen Kanal auch die Steuerung von Richtung und/oder die Geschwindigkeit der Drehung erfolgen. Die Datenempfangseinheit dient dann als Fernbedienung.

In einer weiteren Ausführungsform weist die Projektionsvorrichtung eine Nachführeinrichtung auf, die Bewegungen der Detektionsvorrichtung relativ zur Projektionsvorrichtung in der Horizontalen und senkrecht zur Schnittgeraden erkennt. Die Nachführeinrichtung kann dann eine Drehung des Projektionselements relativ zum Basiselement bewirkt, um die erste Schnittgerade der Detektionsvorrichtung nachzuführen.

Die Nachführeinrichtung kann beispielsweise eine Kamera oder eine ähnliche bildaufnehmende Vorrichtung aufweisen, die im Wesentlichen in Richtung der ersten Schnittgeraden ein Bild der Detektionsvorrichtung aufnimmt und aus Veränderungen des Bildes eine Bewegung der Detektionsvorrichtung relativ zur Projektionsvorrichtung ermittelt. Alternativ kann die Nachführeinrichtung, wenn die Detektionsvorrichtung eine Zeilenkamera oder eines ähnliches punktaufgelöstes Detektionsmittel aufweist und die Punkte, an denen die Laserebenen auf die Zeilenkamera treffen, über einen Kommunikationskanal an die Projektionsvorrichtung oder an eine Datenempfangseinheit übermittelt, aus einer Veränderung der Auftreffpunkte (bzw. des Mittelwerts der Auftreffpunkte) eine Bewegung der Detektionsvorrichtung relativ zur Projektionsvorrichtung ermitteln.

Aufgrund der ermittelten Bewegung der Detektionsvorrichtung relativ zur Projektionsvorrichtung kann die Nachführeinrichtung einen Motor zur Drehung des Projektionselements relativ zum Basiselement ansteuern und somit die Ausrichtung des Projektionselements der Detektionsvorrichtung nachführen.

In einer weiteren Ausführungsform weist die Projektionsvorrichtung mindestens eine weitere Lasereinrichtung auf, die eingerichtet ist, eine dritte Laserebene und eine vierte Laserebene zu emittieren, wobei die dritte Laserebene und die vierte Laserebene so angeordnet sind, dass sie sich entlang einer zweiten Schnittgeraden schneiden, wobei die zweite Schnittgerade parallel zur vertikalen Achse verläuft. Damit ist es möglich, gleichzeitig Unebenheiten eines Bodens und einer Wand zu ermitteln.

### Zeichnung

Anhand der Zeichnungen wird die Erfindung nachstehend exemplarisch anhand von Ausführungsbeispielen eingehend erläutert. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen. Insbesondere sind Merkmale der einzelnen Ausführungsformen nicht

Es zeigen:
- Fig. 1: eine erste Ausführungsform der Markierungsvorrichtung;
- Fig. 2: eine zweite Ausführungsform der Markierungsvorrichtung;
- Fig. 3: eine dritte Ausführungsform der Markierungsvorrichtung;
- Fig. 4: eine schematische Darstellung von zwei Lasereinrichtungen in der Projektionsvorrichtung der Markierungsvorrichtung gemäß Fig. 1;
- Fig. 5: eine schematische Darstellung der von den beiden Lasereinrichtungen gemäß Fig. 4 auf eine Oberfläche projizierten Linien;
- Fig. 6: die dritte Ausführungsform der Markierungsvorrichtung in einer Anwendungssituation;
- Fig. 7a, b: eine bevorzugte Ausführungsform einer zu dem erfindungsgemäßen System gehörenden Detektionsvorrichtung;
- Fig. 8: eine bevorzugte Ausführungsform des erfindungsgemäßen Systems; und
- Fig. 9: eine weitere bevorzugte Ausführungsform des erfindungsgemäßen Systems.

### Beschreibung der Ausführungsbeispiele

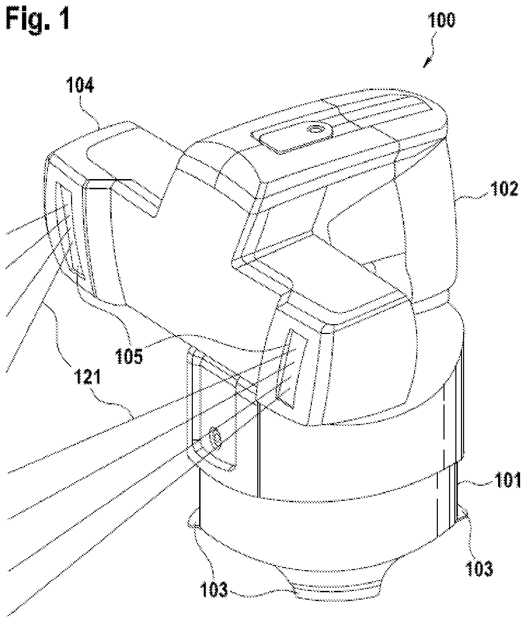

Die in Fig. 1 dargestellte, beispielhafte Markierungsvorrichtung weist eine Projektionsvorrichtung (100) mit einem, gegebenenfalls mehrteiligen Gehäuse auf, welches ein Basiselement (101) und eine Projektionselement (102) bildet. Das Basiselement (101) besitzt mehrere Gehäusefüße (103), mit denen es auf eine zu vermessende Oberfläche gestellt werden kann. Das Projektionselement (102) ist gegenüber dem Basiselement (101) drehbar und höhenverstellbar gelagert. Die Drehung und die Höhenverstellung des Projektionselements (102) gegenüber dem Basiselement (101) erfolgt durch einen oder mehrere Motoren (vorzugsweise Elektromotoren) im Inneren des Gehäuses. Batterien und/oder Akkus dienen zur Stromversorgung sowohl für die Motoren als auch für die im Folgenden beschriebenen weiteren Komponenten der Projektionsvorrichtung (100). Alternativer Weise kann die Stellung von Basiselement (101) und Projektionselement (102) auch manuell erfolgen Im Querbalken (104) des Projektionselements (102) der Markierungsvorrichtung sind zwei Lasereinrichtungen (120) - jeweils bestehend aus einer Laserdiode und einem optischen Element zum Auffächern des von der Laserdiode emittierten Strahls, beispielsweise eine Zylinderlinse oder ein geeignetes diffraktives optisches Element (DOE) - angeordnet. Die beiden Lasereinrichtungen (120) sind pendelnd im Gehäuse der Projektionsvorrichtung (100) aufgehängt, um Unebenheiten oder eine Neigung der zu vermessenden Oberfläche am Aufstellort der Projektionsvorrichtung (100) auszugleichen.

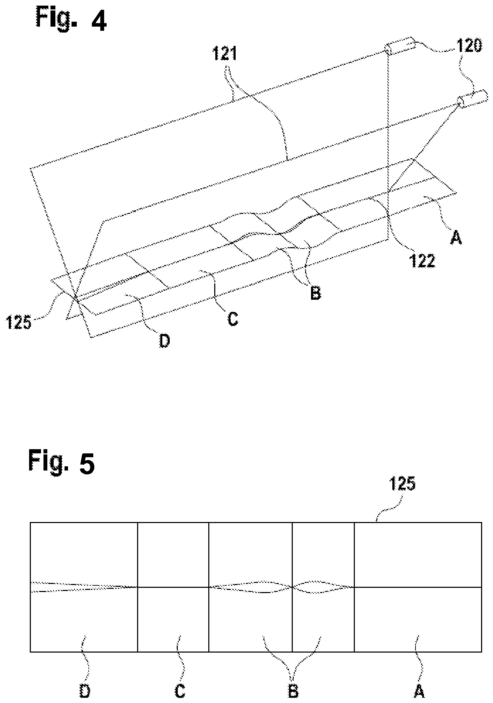

Der von den Laserdioden emittierte und vorzugsweise kollimierte Laserstrahl wird von den jeweiligen optischen Elementen zu jeweils einer Laserebene (121) aufgefächert, die das Gehäuse der Projektionsvorrichtung (100) durch die beiden Austrittsfenster (105) verlassen. Wie in Fig. 1 bzw. Figur 4 dargestellt ist, sind die beiden Laserebenen (121) derart angeordnet, dass sie sich entlang einer Schnittgeraden (122) schneiden. Insbesondere sind die Laserebenen zueinander geneigt. Insbesondere sind die Laserebenen auch zur vertikalen Gehäuseachse der Projektionseinrichtung 100 geneigt.

Die Schnittgerade (122) der Laserebenen verläuft aufgrund der pendelnden Aufhängung der Lasereinrichtungen (120) im Ausführungsbeispiel der Figur 1 senkrecht zur Richtung der Erdbeschleunigung ungefähr auf Höhe der Gehäusefüße (103). Durch die Höhenverstellung des Projektionselements (102) gegenüber dem Basiselement (101) kann die Höhe der Schnittgeraden (122) gegenüber der zu vermessenden Oberfläche eingestellt werden. Vorzugsweise erfolgt diese Einstellung so, dass die Schnittgerade (122) nahe bei der Projektionsvorrichtung (100) auf Höhe der zu vermessenden Oberfläche liegt, sodass auf der zu vermessenden Oberfläche nur eine Laserlinie zu sehen ist.

Wenn die zu vermessende Oberfläche, auf die die Projektionsvorrichtung (100) gestellt ist, horizontal ist, schneiden die beiden Laserebenen (121) die zu vermessende Oberfläche immer auf Höhe der Schnittgeraden (122), sodass in jeder Entfernung von der Projektionsvorrichtung (100) auf der zu vermessenden Oberfläche nur eine Laserlinie zu sehen ist.

Wenn die zu vermessende Oberfläche aber von der Horizontalen abweicht, beispielsweise durch lokale Unebenheiten oder weil sie gegenüber der Horizontalen geneigt ist, so unterscheidet sich die Höhe, in der die Laserebenen (121) die zu vermessende Oberfläche schneiden, von der Höhe der Schnittgeraden (122) der beiden Laserebenen (121) untereinander. Die auf die zu vermessende Oberfläche projizierten Laserlinien laufen dann auseinander (und bei einer Umkehr der Abweichung von der Horizontalen wieder aufeinander zu).

Dieses Verhalten ist in den Figuren 4 und 5 beispielhaft dargestellt für eine Oberfläche (125) die in einem ersten Bereich (A) horizontal ist, in einem zweiten Bereich (B) eine lokale Unebenheit in Form einer Welle aufweist, in einem dritten Bereich (C) wieder horizontal ist und in einem vierten Bereich (D) eine konstante Neigung zur Horizontalen aufweist. Dementsprechend schneiden die beiden Laserebenen (121) die Oberfläche (125) im ersten Bereich (A) und im dritten Bereich (C) entlang derselben Linie, nämlich entlang der Schnittgeraden (122), sodass nur eine einzelne Linie auf der Oberfläche (125) zu sehen ist. Im ersten Teil des zweiten Bereichs (B) schneiden die beiden Laserebenen (121) die Oberfläche (125) unterhalb der Schnittgeraden (122), im zweiten Teil des zweiten Bereichs (B) oberhalb, sodass beide Schnittlinien zu sehen sind. Auch im vierten Bereich (D) schneiden die beiden Laserebenen (121) die Oberfläche (125) unterhalb der Schnittgeraden (122), sodass beide Schnittlinien zu sehen sind.

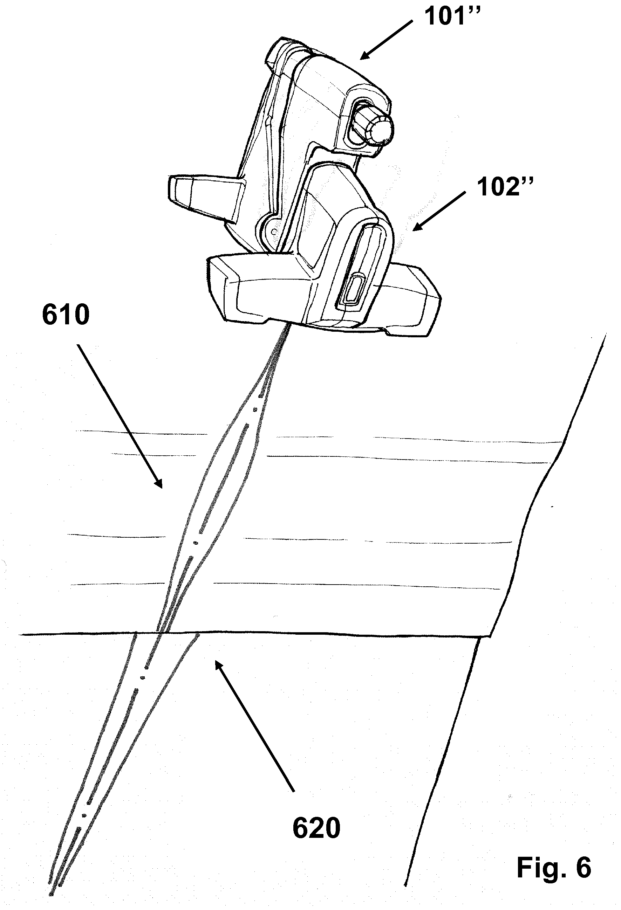

Figur 6 zeigt die Verwendung einer alternativen Ausführungsform der Markierungsvorrichtung an einer Wand. Die Markierungsvorrichtung zur Überprüfung von Oberflächenunebenheiten nach dem Ausführungsbeispiel der Figur 6 unterscheidet sich von der oben beschriebenen Vorrichtung dadurch, dass die Lasereinrichtung, die die optische Markierung erzeugt nicht pendelnd ist. Dazu können beispielsweise Arretierungsmittel vorgesehen sein, die - in noch zu beschreibender Weise - die Lasereinrichtung fixieren. Mit diesem Gerät lassen sich dann beispielsweise eine Mulde (610) oder auch ein Versprung (620) in einer Wand optisch identifizieren, wie dies in der Figur 6 beispielhaft gezeigt ist.

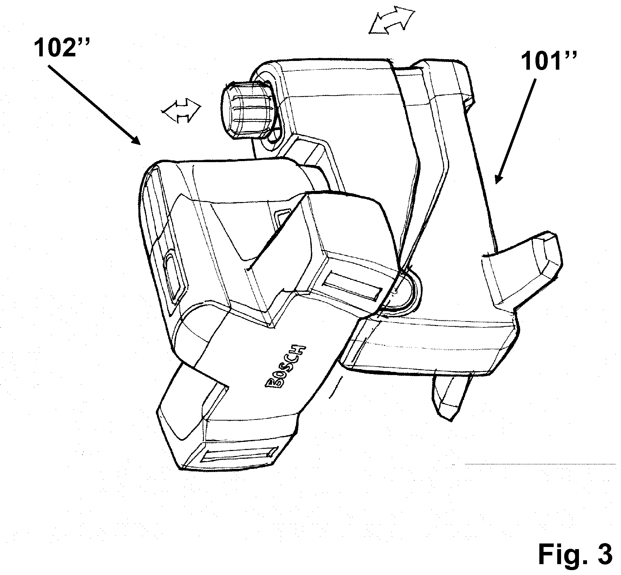

Die Markierungsvorrichtung gemäß der Ausführungsform der Figur 6 ist zur Verdeutlichung für sich nochmals in Figur 3 darstellt.

In dieser Variante (Figur 3 und Figur 6) dient das Basiselement (101")dazu, eine Neigung der Projektionseinrichtung zu verändern. Hierzu ist die Aufhängung der Lichtquelle(n) der Projektionseinrichtung im Gehäuse des Projektionselementes (102"), die insbesondere eine kardanische Aufhängung ist, gesperrt, damit eine Neigung des Bodens nicht automatisch ausgeglichen wird, bzw. damit die Vorrichtung auch um 90° gedreht, beispielsweise an der Wand verwendet werden kann. Damit kann dann zwar nicht mehr die Neigung einer Oberfläche bestimmt werden, dafür ist es jedoch möglich, die Neigung der Projektionseinrichtung an die Neigung der zu untersuchenden Oberfläche anzupassen und dadurch Unebenheiten dieser Oberfläche - wie in Figur 6 dargestellt - besonders gut zu erkennen.

Idealerweise verändert ein Verstellen der Neigung des Projektionselementes bzw. der Projektionsvorrichtung nicht den Abstand der beiden Laserebenen in einer ersten Entfernung nahe an der Vorrichtung. Bevorzugterweise ist dieser Abstand in der ersten Entfernung Null, d.h. die beiden Ebenen schneiden die zu untersuchende Oberfläche in einem gemeinsamen Punkt in der ersten Entfernung.

Durch Verstellen der Neigung der Projektionsvorrichtung lässt sich dann der Abstand der beiden durch die projizierten Laserebenen auf der zu untersuchenden Oberfläche erzeugten Linien in einer zweiten Entfernung von der Vorrichtung verstellen. Wenn der Abstand der Linien auch in dieser zweiten Entfernung auf Null eingestellt wird und die zu untersuchende Oberfläche zwischen dem Schnittpunkt in der ersten Entfernung und dem Schnittpunkt in der zweiten Entfernung keine Unebenheiten aufweist, so verlaufen die beiden erzeugten Linien auf der Oberfläche aufeinander, sodass nur eine einzelne Linie zu sehen ist.

Falls die zu untersuchende Oberfläche aber entlang der erzeugten Linie Unebenheiten aufweist, (siehe Figur 6) so sind diese dadurch zu erkennen, dass die beiden Linien auseinander und wieder zusammen laufen, abhängig von der Richtung der Unebenheiten.

Im Unterschied zu der oben beschriebenen, pendelnden Vorrichtung lässt sich die Vorrichtung gemäß dem Ausführungsbeispiel der Figur 3 bzw. 6 auch beispielsweise an Wänden oder an der Decke einsetzen, da die Projektionseinrichtung nicht pendelnd aufgehängt ist. Aber auch beim Einsatz am Boden lassen sich Unebenheiten unabhängig von der Neigung des Bodens erkennen. Geringe Unebenheiten lassen sich gegebenenfalls sogar besser erkennen, weil die Änderung des Abstands der erzeugten Linien nicht von einem Auseinanderlaufen dieser Linien aufgrund der Bodenneigung überlagert wird.

In einer Variante ist das Projektionselement in Bezug auf die Basis höhenverstellbar und das Gerät ist vorzugsweise mit einer Skala zur Messung der Höhenverstellung ausgestattet.

Damit ist zum einen eine Verstellung der Referenzebene möglich. Diese Variante erlaubt es aber auch, den höchsten und den niedrigsten Punkt einer Fläche zu finden und über die Messskala die absolute Höhenabweichung zu bestimmen. Die Höhenverstellung kann dabei manuell oder über einen Motor erfolgen. Die motorgetriebene Höhenverstellung erlaubt es auch, die verstellte Höhendifferenz automatisch zu bestimmen und ggf. auf einem Display anzuzeigen.

Vorteilhafter Weise besitzt das Projektionselement der erfindungsgemäßen Projektionseinrichtung eine Verriegelungseinrichtung, um die Aufhängung der Laserquelle(n) der Projektionseinrichtung zu sperren, um das Gerät auch an einer Wand betreiben zu können, wie dies im Zusammenhang mit Figur 6 bereits beschrieben wurde oder aber auch das Gerät beim Transport zu schützen.

In einer vorteilhaften Variante dient das Basiselement dazu, die Vorrichtung mit einer kardanisch aufgehängten, frei pendelnden Projektionseinrichtung zu betreiben. Damit kann dann in noch zu beschreibender Weise die Neigung der Oberfläche bestimmt werden, auf die die Vorrichtung gestellt wird. Auch lassen sich Unebenheiten dieser Oberfläche erkennen.

Das Lösen der Sperre der kardanischen Aufhängung beim Aufsetzen des Projektionselementes auf ein geeignetes Basiselement kann durch mechanische Wechselwirkung von Komponenten der beiden Module erfolgen. Alternativ kann auch eine Kodierung des Basiselementes vom Projektionselement beispielsweise elektronisch erkannt werden.

Unabhängig davon aber wird die kardanische Aufhängung automatisch gesperrt, wenn das Projektionselement nicht mit einem geeigneten Basiselement verbunden ist. Die Sperre wird beim Aufsetzen auf ein Basiselementes nur dann gelöst, wenn das Basiselement für die Neigungsbestimmung vorgesehen ist, wie dies im Ausführungsbeispiel der Figur 3 und 6 gezeigt ist.

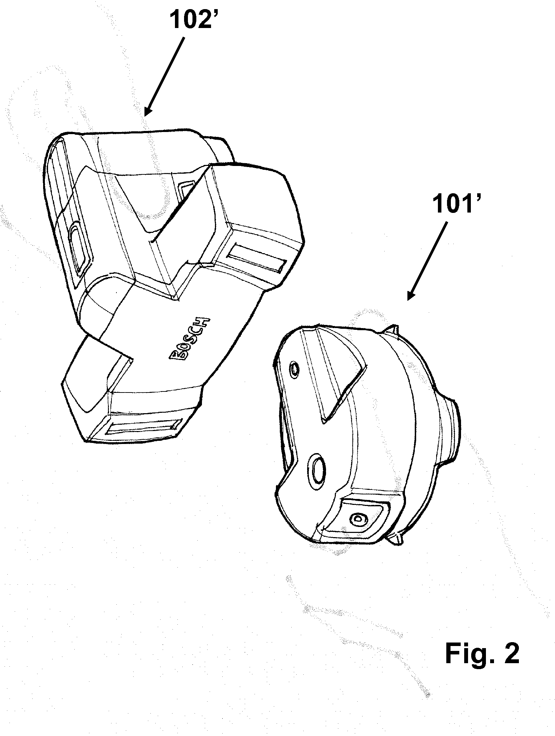

Die Markierungsvorrichtung zur Überprüfung von Oberflächenunebenheiten ist in einer vorteilhaften Ausführungsform daher derart ausgestaltet, dass die Projektionsvorrichtung in einem ersten Gehäusemodul (Projektionselement 102') angeordnet ist, das mit verschiedenen zweiten Gehäusemodulen (Basiselementen 101') je nach Messaufgabe verbunden werden kann. Insbesondere sind Projektionselement und Basiselement von einander trennbar, wie dies im Ausführungsbeispiel der Figur 2 gezeigt ist.

In einer Variante dient gerade das Basismodul dazu der erfindungsgemäßen Vorrichtung zu ermöglichen, mit einer kardanisch aufgehängten, frei pendelnden Projektionseinrichtung zu arbeiten. Damit kann die Neigung einer Oberfläche bestimmt werden, auf die die Vorrichtung gestellt wird. Auch lassen sich Unebenheiten dieser Oberfläche erkennen.

In einer anderen Variante (siehe insbesondere Figur 3 und Figur 6) dient das Basismodul dazu, die Neigung der Projektionseinrichtung zu verändern. Hierzu ist die kardanische Aufhängung der Projektionseinrichtung im Gehäuse des Projektionselementes gesperrt, damit eine Neigung des Bodens nicht automatisch ausgeglichen wird, bzw. damit die Vorrichtung auch um 90° gedreht, beispielsweise an einer Wand verwendet werden kann. Damit kann, die Neigung der Projektionsvorrichtung an die Neigung der zu untersuchenden Oberfläche angepasst werden, um dadurch Unebenheiten dieser Oberfläche besonders gut zu erkennen.

In einzelnen Ausführungsformen dieser Varianten kann das Basismodul eine Drehung des Projektionsmoduls und/oder eine Verstellung von dessen Höhe bewerkstelligen.

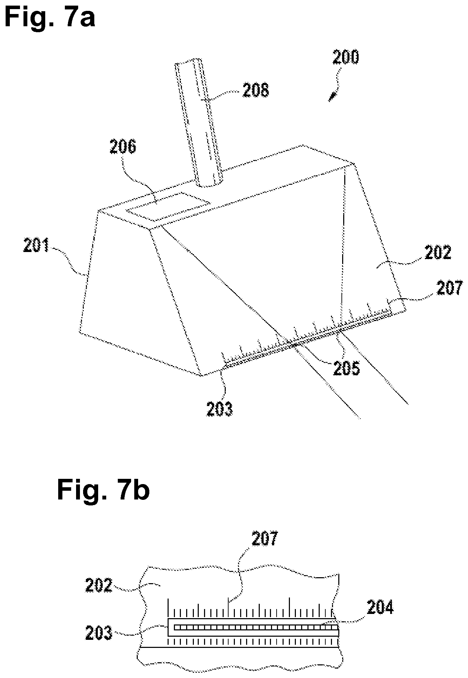

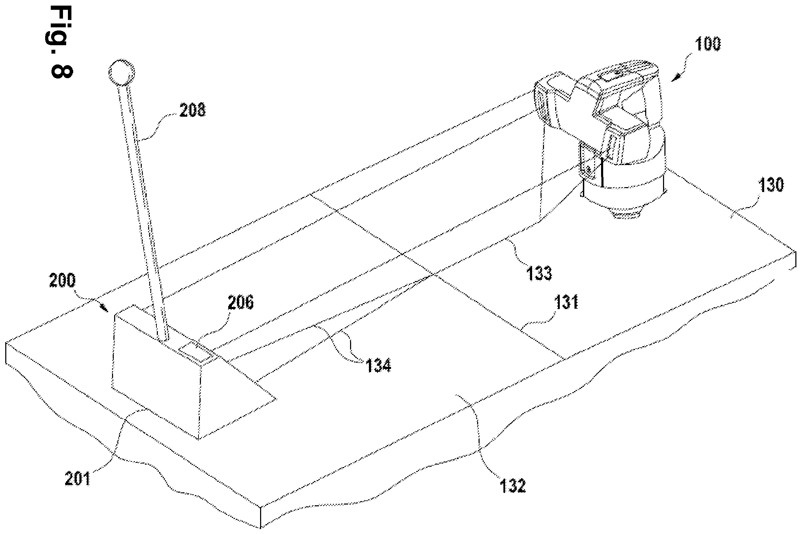

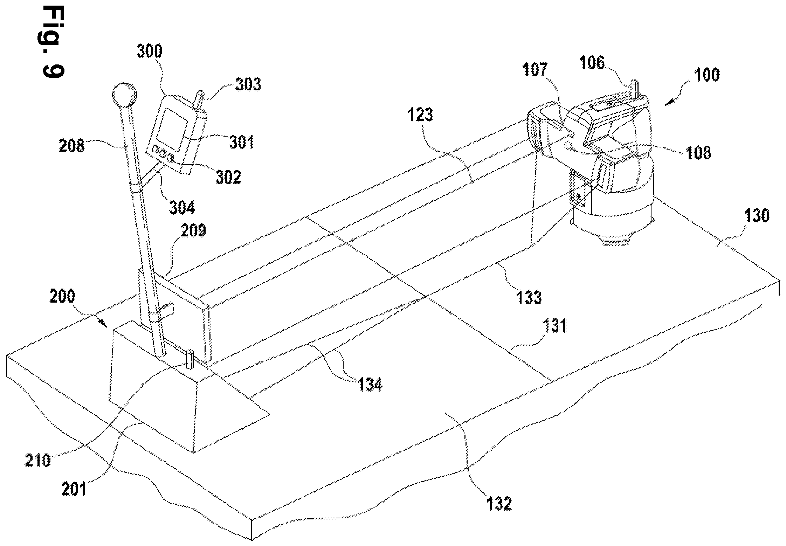

Ein erfindungsgemäßes System, wie es beispielsweise in Fig. 8 oder auch Figur 9 dargestellt wird, weist zumindest eine Markierungsvorrichtung mit einer Projektionsvorrichtung (100) wie in Fig. 1 bis Fig. 6 dargestellt und eine Detektionsvorrichtung (200) wie beispielsweise in Fig. 7 dargestellt, auf.

Die in Fig. 7a und als Ausschnittsvergrößerung in Fig. 7b dargestellte Detektionsvorrichtung (200) weist ein Gehäuse (201) auf, dessen Vorderseite (202) eine Öffnung (203) aufweist. Innerhalb des Gehäuses (201) ist neben der Öffnung (203) eine CCD-Zeilenkamera (204) angeordnet, die von einer zugehörigen elektronischen Schaltung angesteuert und ausgelesen wird. Batterien und/oder Akkus dienen zur Stromversorgung sowohl für die Zeilenkamera (204) und der elektronischen Schaltung als auch für die im Folgenden beschriebenen weiteren Komponenten der Detektionsvorrichtung (200).

Vorzugsweise ist die Öffnung (203) möglichst nahe am unteren Rand der Vorderseite (202) angeordnet, sodass die Zeilenkamera (204) sich möglichst nahe an der zu vermessenden Oberfläche befindet. Dadurch ist es möglich, die Position der Punkte (205), an denen die beiden Laserebenen (121) auf die Zeilenkamera (204) treffen, möglichst nahe an der zu vermessenden Oberfläche zu bestimmen. Aus der Position der beiden Punkte (205) lässt sich dann deren Abstand ermitteln und auf einer Anzeigevorrichtung (206) anzeigen.

Auf der Vorderseite (202) ist neben der Öffnung (203) eine Skala (207) angebracht, die auch eine visuelle Bestimmung des Abstands der beiden Punkte (205) erlaubt. Vorzugsweise ist die Vorderseite (202) auch mit einer Beschichtung versehen, die ein visuelles Erkennen des Laserlichts auf der Vorderseite (202) erleichtert.

Mit dem Gehäuse (201) der Detektionsvorrichtung (200) verbunden ist ein Haltegriff (208), der die Positionierung der Detektionsvorrichtung (200) erleichtert, insbesondere für einen stehenden Benutzer.

In Fig. 8 ist das System bestehend aus einer Projektionsvorrichtung (100) und einer Detektionsvorrichtung (200) dargestellt. Die in Fig. 8 gezeigte Projektionsvorrichtung (100) entspricht der mit Bezug zu Fig. 1 erläuterten Projektionsvorrichtung. Die in Fig. 8 gezeigte Detektionsvorrichtung (200) entspricht der mit Bezug zu Fig. 7a und 7b erläuterten Detektionsvorrichtung.

Die in Fig. 8 dargestellte Projektionsvorrichtung (100) steht auf einem horizontalen Bereich (130) einer zu vermessenden Oberfläche. Die von den Lasereinrichtungen emittierten Laserebenen (121) treten durch die Austrittfenster (105) aus dem Gehäuse der Projektionsvorrichtung (100) aus und schneiden sich entlang einer Schnittgeraden auf Höhe des horizontalen Bereichs (130). Dadurch liegen die Schnittlinien der beiden Laserebenen (121) mit der Oberfläche aufeinander, sodass nur eine Laserlinie (133) auf dem horizontalen Bereich (130) zu sehen ist.

Ab einer Kante (131) fällt die zu vermessende Oberfläche in einem geneigten Bereich (132) mit einer konstanten Neigung zur Horizontalen ab. Dadurch liegen die Schnittlinien der beiden Laserebenen (121) mit der Oberfläche nicht mehr aufeinander, sondern laufen auseinander, sodass zwei Laserlinien (134) auf dem geneigten Bereich (132) zu sehen sind. Die beiden Laserebenen (121) treffen daher an zwei unterschiedlichen Punkten (205) auf die Zeilenkamera (204) der Detektionsvorrichtung (200), wodurch deren Abstand bestimmt und auf der Anzeigevorrichtung (206) angezeigt werden kann.

In Fig. 9 ist die Anordnung von Projektionsvorrichtung (100) und Detektionsvorrichtung (200) wie in Fig. 8. Allerdings weisen sowohl Projektionsvorrichtung (100) als auch Detektionsvorrichtung (200) weitere Komponenten auf, die eine umfassende Vermessung der Oberfläche vereinfachen.

Die in Fig. 9 dargestellte Projektionsvorrichtung (100) weist eine elektro-optische Vorrichtung zur Entfernungsmessung auf. Hierzu wird mittels einer weiteren Lasereinrichtung in der Projektionsvorrichtung (100) ein moduliertes Lasersignal (123) erzeugt, das durch ein weiteres Austrittsfenster (107) das Gehäuse der Projektionsvorrichtung (100) verlässt und auf ein Reflektionselement (209) der Detektionsvorrichtung (200) trifft. Das vom Reflektionselement (209) reflektierte und/oder gestreute Licht des modulierten Lasersignals (123) wird durch einen hinter einem Eintrittsfenster (108) im Gehäuse der Projektionsvorrichtung (100) angeordneten Detektor detektiert und daraus der Abstand zwischen Projektionsvorrichtung (100) und Detektionsvorrichtung (200) ermittelt. Wenn, wie in Fig. 9 dargestellt, der Abstand zwischen Reflektionselement (209) und Projektionsvorrichtung (100) sich vom Abstand zwischen Zeilenkamera (204) und Projektionsvorrichtung (100) unterscheidet, kann diese konstruktionsbedingte und feste Differenz bei der Abstandsermittlung berücksichtigt werden.

Auch ist es möglich, bei bekanntem Abstand zwischen der Projektionsvorrichtung (100) und der Detektionsvorrichtung (200) die Skala(207) der Detektionsvorrichtung direkt in Neigungswinkeln zu skalieren. Dies setzt einen vorgegebenen festen Abstand zwischen der Projektionsvorrichtung (100) und der Detektionsvorrichtung (200) voraus, den ein Anwender einzuhalten hat. Oder aber das System bestimmt den Abstand mittels eines integrierten Entfernungsmessers selbst und eine Recheneinheit wandelt die Skalenwerte jeweils aktuell in Neigungswerte um, die dann beispielsweise mit Hilfe eines elektronischen Displays ausgegeben werden.

Das in Fig. 9 dargestellte System weist auch eine Datenempfangseinrichtung (300) mit Anzeigevorrichtung (301) und Bedienelementen (302) auf. Die Datenempfangseinrichtung (300) kann mit der Projektionsvorrichtung (100) und der Detektionsvorrichtung (200) mittels Kommunikationseinrichtungen (106, 210, 303) kommunizieren und kann beispielsweise von der Projektionsvorrichtung (100) den ermittelten Abstand zwischen Projektionsvorrichtung (100) und Detektionsvorrichtung (200) übermittelt bekommen und von der Detektionsvorrichtung (200) den ermittelten Abstand der Auftreffpunkte der beiden Laserebenen (121) auf die Zeilen kamera (204) übermittelt bekommen. Aus diesen Daten kann die Datenempfangseinrichtung (300) dann beispielsweise eine durchschnittliche Neigung der zu vermessenden Oberfläche ermitteln und auf der Anzeigevorrichtung (301) darstellen.

Die Datenempfangseinrichtung (300) kann vorzugsweise auch zur Steuerung der Projektionsvorrichtung (100) verwendet werden. Beispielsweise kann über die Bedienelemente (302) der Datenempfangseinrichtung (300) die Höhenverstellung und/oder die Rotation des Projektionselements der Projektionsvorrichtung (100) relativ zum Basiselement gesteuert werden.

Die Datenempfangseinrichtung (300) ist an einem Halter (304) befestigt, der wiederum mit dem Haltegriff (208) der Detektionsvorrichtung (200) verbunden ist. Vorzugsweise lässt sich die Datenempfangseinrichtung (300) vom Halter entfernen und von der Detektionsvorrichtung (200) getrennt benutzen. Hierzu weist die Datenempfangseinrichtung (300) vorzugsweise Batterien und/oder Akkus zur Stromversorgung auf.

## Patentansprüche

1. System, bestehend aus zumindest einer auf einer Oberfläche anordenbaren Markierungsvorrichtung sowie einer Detektionsvorrichtung, zur Vermessung einer Neigung oder Unebenheit der Oberfläche, wobei die Markierungsvorrichtung zumindest eine Projektionsvorrichtung bestehend aus einem Basiselement und einem Projektionselement aufweist, wobei das Projektionselement relativ zum Basiselement stellbar, insbesondere motorisch stellbar, bevorzugt rotierbar und/oder höhenverstellbar, ist, und das Projektionselement, insbesondere durch ein Gehäuse des Projektionselements und/oder durch ein im Inneren des Gehäuses aufgehängtes Pendel, eine vertikale Achse definiert, wobei das Projektionselement mindestens eine Lasereinrichtung aufweist, die eingerichtet ist, gleichzeitig eine erste Laserebene und eine zweite Laserebene auf die als Projektionsebene dienende Oberfläche zu emittieren, wobei die erste Laserebene und die zweite Laserebene zueinander geneigt sind und so angeordnet sind, dass sie sich entlang einer ersten Schnittgeraden schneiden, wobei die erste Schnittgerade senkrecht zur vertikalen Achse verläuft, **dadurch gekennzeichnet, dass** die Detektionsvorrichtung des Systems zur Bestimmung des Abstands der zwei Laserebenen entlang einer Messgeraden der Detektionsvorrichtung vorgesehen ist.

2. System nach Anspruch 1, **dadurch gekennzeichnet, dass** die Detektionsvorrichtung eine Zeilenkamera aufweist.

3. System nach einem der vorangegangenen Ansprüche 1 oder 2 **dadurch gekennzeichnet, dass** eine Vorrichtung zum Bestimmen des Abstands zwischen der Projektionsvorrichtung und der Detektionsvorrichtung vorgesehen ist.

4. System nach Anspruch 3, **dadurch gekennzeichnet, dass** die Markierungs-vorrichtung einen optischen Entfernungsmesser, insbesondere einen Laserentfernungsmesser, aufweist.

5. System nach einem der vorangegangenen Ansprüche 1 bis 4, **dadurch gekennzeichnet, dass** die Projektionsvorrichtung und/oder die Detektionsvorrichtung eine Kommunikationseinrichtung aufweisen.

6. System nach einem der vorangegangenen Ansprüche 1 bis 5, **weiter aufweisend** mindestens eine Anzeigevorrichtung.

7. System nach einem der vorangegangenen Ansprüche 1 bis 6, **dadurch gekennzeichnet, dass** die Höhe der Schnittgeraden relativ zu einem Gehäuseteil der Projektionsvorrichtung verstellbar ist.

8. System nach einem der vorangegangenen Ansprüche 1 bis 7, **dadurch gekennzeichnet, dass** die Projektionsvorrichtung eine Nachführeinrichtung aufweist, die Bewegungen der Detektionsvorrichtung relativ zur Projektions-vorrichtung in der Horizontalen und senkrecht zur Schnittgeraden erkennt und eine Drehung des Projektionselements relativ zum Basiselement bewirkt, um die erste Schnittgerade der Detektions-vorrichtung nachzuführen.

9. System nach einem der vorangegangenen Ansprüche, **dadurch gekennzeichnet, dass** das Projektionselement relativ zum Basiselement rotierbar, insbesondere motorisch rotierbar, ist.

10. System nach einem der vorangegangenen Ansprüche, **dadurch gekennzeichnet, dass** das Projektionselement relativ um eine Achse senkrecht zur Projektionsebene rotierbar ist.

11. System nach einem der vorangegangenen Ansprüche, **dadurch gekennzeichnet, dass,** das Projektionselement relativ zum Basiselement höhenverstellbar, insbesondere motorisch höhenverstellbar, ist.

12. System nach einem der vorangegangenen Ansprüche, **dadurch gekennzeichnet, dass** die mindestens eine Lasereinrichtung pendelbar in der Markierungsvorrichtung angeordnet ist.

13. System nach Anspruch 12, **dadurch gekennzeichnet, dass** Verriegelungsmittel vorgesehen sind, die es erlauben, die zumindest eine pendelbar in der Markierungsvorrichtung angeordnete Lasereinrichtung zu arretieren.

14. System nach einem der vorangegangenen Ansprüche, **dadurch gekennzeichnet, dass** Mittel vorgesehen sind, die es ermöglichen, das Projektionselement gegenüber dem Basiselement zu neigen.

15. System nach einem der vorangegangenen Ansprüche, **dadurch gekennzeichnet, dass** die Projektionsvorrichtung mindestens eine weitere Lasereinrichtung aufweist, die eingerichtet ist, eine dritte Laserebene und eine vierte Laserebene zu emittieren, wobei die dritte Laserebene und die vierte Laserebene so angeordnet sind, dass sie sich entlang einer zweiten Schnittgeraden schneiden, wobei insbesondere die zweite Schnittgerade parallel zur vertikalen Achse verläuft.

## Claims

1. System, consisting of at least one marking apparatus, which is arrangeable on a surface, and of a detection apparatus, for measuring an inclination or unevenness of the surface, wherein the marking apparatus has at least one projection apparatus consisting of a base element and a projection element, wherein the projection element is adjustable relative to the base element, in particular adjustable by way of motor, preferably rotatable and/or adjustable in terms of height, and the projection element defines a vertical axis, in particular by way of a housing of the projection element and/or by way of a pendulum that is suspended inside the housing, wherein the projection element has at least one laser device which is adapted to emit a first laser plane and a second laser plane, **characterized in that** the laser device is adapted to simultaneously emit the first and the second laser plane onto the surface which serves as the projection plane, wherein the first laser plane and the second laser plane are tilted with respect to one another and arranged such that they intersect along a first straight intersection line, wherein the first straight intersection line extends perpendicularly to the vertical axis, and the detection apparatus of the system is adapted for determining the distance of the two laser planes along a straight measurement line of the detection apparatus.

2. System according to Claim 1, **characterized in that** the detection apparatus has a line-scan camera.

3. System according to either of the preceding Claims 1 and 2, **characterized in that** an apparatus for determining the distance between the projection apparatus and the detection apparatus is provided.

4. System according to Claim 3, **characterized in that** the marking apparatus has an optical rangefinder, in particular a laser rangefinder.

5. System according to one of the preceding Claims 1 to 4, **characterized in that** the projection apparatus and/or the detection apparatus has a communication device.

6. System according to one of the preceding Claims 1 to 5, furthermore having at least one display apparatus.

7. System according to one of the preceding Claims 1 to 6, **characterized in that** the height of the straight intersection line is adjustable relative to a housing part of the projection apparatus.

8. System according to one of the preceding Claims 1 to 7, **characterized in that** the projection apparatus has a tracking device that identifies movements of the detection apparatus relative to the projection apparatus in the horizontal and perpendicular to the straight intersection line and effects a rotation of the projection element relative to the base element so as to adjust the first straight intersection line to follow the detection apparatus.

9. System according to one of the preceding claims, **characterized in that** the projection element is rotatable relative to the base element, in particular rotatable by way of a motor.

10. System according to one of the preceding claims, **characterized in that** the projection element is rotatable relatively about an axis perpendicular to the projection plane.

11. System according to one of the preceding claims, **characterized in that** the projection element is adjustable in terms of height relative to the base element, in particular adjustable in terms of height by way of a motor.

12. System according to one of the preceding claims, **characterized in that** the at least one laser device is arranged in the marking apparatus such that it can oscillate.

13. System according to Claim 12, **characterized in that** locking means are provided that permit the locking of the at least one laser device arranged in the marking apparatus such that it can oscillate.

14. System according to one of the preceding claims, **characterized in that** means are provided which permit the tilting of the projection element with respect to the base element.

15. System according to one of the preceding claims, **characterized in that** the projection apparatus has at least one further laser device which is adapted to emit a third laser plane and a fourth laser plane, wherein the third laser plane and the fourth laser plane are arranged such that they intersect along a second straight intersection line, wherein in particular the second straight intersection line extends parallel to the vertical axis.

## Revendications

1. Système, composé d'au moins un dispositif de marquage pouvant être disposé sur une surface ainsi qu'un dispositif de détection destiné à mesurer une inclinaison ou un défaut de planéité de la surface, le dispositif de marquage possédant au moins un dispositif de projection composé d'un élément de base et d'un élément de projection, l'élément de projection étant positionnable par rapport à l'élément de base, notamment positionnable par motorisation, de préférence rotatif et/ou réglable en hauteur, et l'élément de projection définissant un axe vertical, notamment par un boîtier de l'élément de projection et/ou par un pendule suspendu à l'intérieur du boîtier, l'élément de projection possédant au moins un appareil à laser qui est conçu pour émettre un premier plan de laser et un deuxième plan de laser, **caractérisé en ce que** l'appareil à laser est conçu pour émettre le premier et le deuxième plan de laser simultanément sur la surface servant de plan de projection, le premier plan de laser et le deuxième plan de laser étant inclinés l'un par rapport à l'autre et étant disposés de telle sorte qu'ils se croisent le long d'une première droite d'intersection, la première droite d'intersection s'étendant perpendiculairement à l'axe vertical et le dispositif de détection du système étant conçu pour déterminer l'écart entre les deux plans de laser le long d'une droite de mesure du dispositif de détection.

2. Système selon la revendication 1, **caractérisé en ce que** le dispositif de détection possède une caméra linéaire.

3. Système selon l'une des revendications précédentes 1 ou 2, **caractérisé en ce qu'**un dispositif destiné à déterminer l'écart entre le dispositif de projection et le dispositif de détection est prevu.

4. Système selon la revendication 3, **caractérisé en ce que** le dispositif de marquage possède un télémètre optique, notamment un télémètre à laser.

5. Système selon l'une des revendications précédentes 1 à 4, **caractérisé en ce que** le dispositif de projection et/ou le dispositif de détection possèdent un appareil de communication.

6. Système selon l'une des revendications précédentes 1 à 5, possédant en plus au moins un dispositif d'affichage.

7. Système selon l'une des revendications précédentes 1 à 6, **caractérisé en ce que** la hauteur de la droite d'intersection est positionnable par rapport à une partie du boîtier du dispositif de projection.

8. Système selon l'une des revendications précédentes 1 à 7, **caractérisé en ce que** le dispositif de projection possède un appareil de poursuite qui détecte les mouvements du dispositif de détection par rapport au dispositif de projection dans l'horizontale et perpendiculairement aux droites d'intersection et provoque une rotation de l'élément de projection par rapport à l'élément de base afin de poursuivre la première droite d'intersection du dispositif de détection.

9. Système selon l'une des revendications précédentes, **caractérisé en ce que** l'élément de projection est rotatif par rapport à l'élément de base, notamment rotatif par motorisation.

10. Système selon l'une des revendications précédentes, **caractérisé en ce que** l'élément de projection est rotatif par rapport à un axe perpendiculaire au plan de projection.

11. Système selon l'une des revendications précédentes, **caractérisé en ce que** l'élément de projection est réglable en hauteur par rapport à l'élément de base, notamment réglable en hauteur par motorisation.

12. Système selon l'une des revendications précédentes, **caractérisé en ce que** l'au moins un appareil à laser est disposé dans le dispositif de marquage de manière à pouvoir se balancer.

13. Système selon la revendication 12, **caractérisé en ce qu'**il existe des moyens de verrouillage qui permettent de bloquer au moins un appareil à laser disposé dans le dispositif de marquage de manière à pouvoir se balancer.

14. Système selon l'une des revendications précédentes, **caractérisé en ce qu'**il existe des moyens qui permettent d'incliner l'élément de projection par rapport à l'élément de base.

15. Système selon l'une des revendications précédentes, **caractérisé en ce que** le dispositif de projection possède au moins un appareil à laser supplémentaire, lequel est conçu pour émettre un troisième plan de laser et un quatrième plan de laser, le troisième plan de laser et le quatrième plan de laser étant disposés de telle sorte qu'ils se croisent le long d'une deuxième droite d'intersection, la deuxième droite d'intersection s'étendant notamment parallèlement à l'axe vertical.
